# EUROPEAN PATENT SPECIFICATION

(11) **EP 4 369 321 B1**
(45) Date of publication and mention of the grant of the patent: **05.11.2025**
(21) Application number: 24166223.8
(22) Date of filing: 30.09.2020
(51) Int. Cl.: G08B 25/00, G08B 13/08, G08B 25/08

(54) **A SECURITY MONITORING SYSTEM**
SICHERHEITSÜBERWACHUNGSSYSTEM
SYSTÈME DE SURVEILLANCE DE SÉCURITÉ

(30) Priority: 30.09.2019 ES 201930847
(43) Date of publication of application: 15.05.2024
(62) Divisional of application: 20786498.4
(73) Proprietor: Verisure Sàrl, 1290 Versoix (CH)
(72) Inventor: IGLESIAS, Angel Francisco Piorno, Versoix, Geneva (CH); ECHEVERRIA, Jon Noble, Versoix, Geneva (CH)
(74) Representative: Dennemeyer & Associates S.A.

(56) References cited:
- US-A1- 2016 117 913
- US-A1- 2017 039 843
- US-A1- 2017 109 998

## Description

### Technical field

The present invention relates to a security monitoring system for monitoring premises, a portable authentication device for such a system, and a method of operating such a portable authentication device.

### Background

Security monitoring systems for monitoring premises, often referred to as alarm systems, typically provide a means for detecting the presence and/or actions of people at the premises, and reacting to detected events. Commonly such systems include sensors to detect the opening and closing of doors and windows, movement detectors to monitor spaces (both within and outside buildings) for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a control unit (which may also be termed a central unit), generally mains powered, that is coupled to the sensors, detectors, cameras, etc. ("nodes"), and which processes received notifications and determines a response. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems typically include an autonomous power source, such as a battery power supply, rather than being mains powered.

As an alternative to self-contained systems, a security monitoring system may include an installation at a premises, domestic or commercial, that is linked to a Central Monitoring Station (CMS) where, typically, human operators manage the responses required by different alarm and notification types. In such centrally monitored systems, the central unit at the premises installation typically processes notifications received from the nodes in the installation, and notifies the Central Monitoring Station of only some of these, depending upon the settings of the system and the nature of the detected events. In such a configuration, the central unit at the installation is effectively acting as a gateway between the nodes and the Central Monitoring Station. Again, in such installations the central unit may be linked by wires, or wirelessly, to the various nodes of the installation, and these nodes will typically be battery rather than mains powered.

In both these types of systems, the central unit is typically responsible for arming and disarming the system but may not be located close to an entrance door. When the house owner returns to the monitored premises where the monitoring system is in an armed state, the system must be disarmed fairly quickly, for example within 30 seconds of opening the door. If the central unit is not located close to the entrance door, it may be difficult for the owner to reach the central unit and enter the disarm code - which may typically be 4 to 6 characters or digits, in time. This obviously poses an even greater challenge for the elderly or infirm. For this reason it is known to provide a unit close to the entrance door by means of which the owner can disarm the system. Such a unit, which may be termed a disarm node, may be provided inside the protected premises close to each main entrance, but in other installations only the single main entrance will be provided with a disarm node. The disarm node will typically be fixed, for example to a wall or other surface of the premises, close to the relevant entrance to the building or protected space. Some installations may be so configured that the system can only be armed or disarmed by means of a disarm node, the central unit possibly not even including a keypad or NFC functionality.

Although the provision of a disarm node adjacent the entrance to the protected premises means that the householder doesn't have to walk all the way to the central unit to enter the disarm code, there are occasions when it is inconvenient to have to enter the disarm code manually even through a disarm node. For example, if the householder is carrying an infant, packages, or is otherwise encumbered, or if the householder is on crutches, it may still be extremely inconvenient to have to enter a disarm code manually. And under such circumstances it can similarly be extremely inconvenient for a user to have to present a portable authentication device or "dongle" physically to a disarm node - for example by touching the disarm node with the dongle, since like manually entering a disarm code this requires the user to have a "free" hand to enable the dongle to be presented.

It would be desirable to be able to reduce or even eliminate this problem while still retaining a high level of security.

US 2017/039843 A1 discloses a generic security system.

Embodiments of the invention enable hands-free disarming of a security monitoring system while retaining a high level of security. That is, embodiments of the invention provide a system in which secure and appropriate disarming can be achieved by a user with a portable authentication device (e.g. a fob or other physical token) without the need for the user to take any action (other than carrying the portable authentication device on or about their person).

### Summary of the invention

The objective technical problem to be solved may be considered to consist in overcoming or at least reducing the disadvantages according to the prior art. The problem is solved by the subject matter of the independent claims. In particular, a security monitoring system according to the subject matter of claim 1 and a method of disarming a security monitoring system according to the subject matter of claim 7 are provided.

According to a first aspect, the present invention provides a security monitoring system for a building or a secured space within a building as defined in claim 1.

User convenience is improved over known systems by providing a portable authentication device that enables hands free disarming, and by including a motion sensor and having the portable authentication device only provide the instructed disarm message if, when the instruction is received, the portable authentication device is not deemed to be stationary, security is enhanced because a portable authentication device left in the vicinity of the disarm node, rather than carried by someone opening the door, will not transmit a disarm message to the control unit. This means that if a bad actor opens the door to enter the secured space, the system will not automatically disarm as a consequence of a portable authentication device having been left in the vicinity of the relevant disarm node.

A portable authentication device according to the first aspect may be deemed to be stationary if the motion sensor senses no motion at the time the instruction is received.

Alternatively, a portable authentication device according to the first aspect may be deemed to be stationary if the motion sensor has sensed no motion of the portable authentication device during a predetermined period preceding the time when the instruction is received.

The present invention provides a method of operating a security monitoring system for a building or a secured space within a building as defined in claim 7.

In the method according to this aspect, the portable authentication device may be deemed to be stationary if the motion sensor senses no motion at the time the instruction is received.

Alternatively, in the method according to this aspect, the portable authentication device may be deemed to be stationary if the motion sensor has sensed no motion of the portable authentication device during a predetermined period preceding the time when the instruction is received.

For the various embodiments of the present invention, in many domestic installations all the monitored entrances may be doorways fitted with doors, and monitoring for a breach may involve detecting the opening of a door, or the passage of a person through a doorway. But some or all of the monitored entrances may not include doors or other closures, so that detection of a breach may involve using a movement or visual sensor to detect the presence or movement of a person at or through an entrance such as a path, passageway or other opening.

Embodiments of the invention will now be described, by way of example only, with reference to the accompanying drawings, in which:
Figure 1 is an overview of a security monitoring system according to a first aspect of the invention;
Figure 2 is a schematic drawing showing a stylised building in which a security monitoring system according to an embodiment of the invention is installed;
Figure 3 is a timing diagram illustrating a method of controlling a security monitoring system according to an embodiment of the invention;
Figure 4 is a schematic drawing showing features of elements of the security monitoring system according to an embodiment of the invention;
Figure 5 is a flowchart illustrating an aspect of the operation of a portable authentication device according to an embodiment of the invention;
Figure 6 is a schematic drawing illustrating an arrangement of elements of a security monitoring system according to an embodiment of the invention;
Figure 7 is a schematic drawing illustrating operation of the receiver function of the portable authentication device and a possible packet structure for a transmission from a disarm node; and
Figures 8a and 8b are schematic drawings illustrating a security monitoring system according to an embodiment of the invention in which a disarm node is provided outside the zone or building protected by the system.

### Specific description

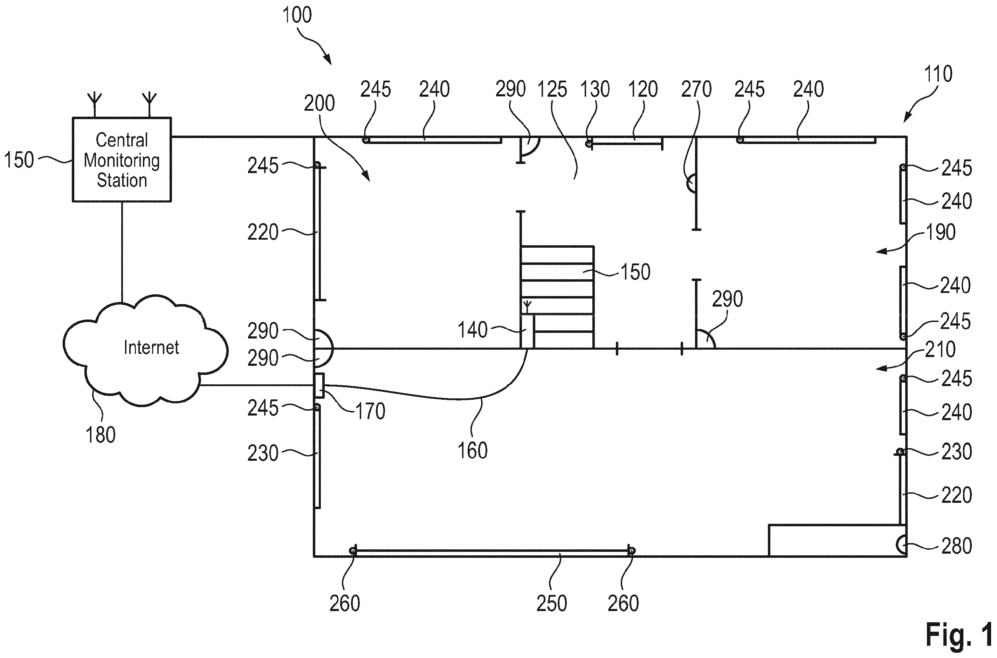

Figure 1 is an overview of a security monitoring system according to a first aspect of the invention. The Figure shows a rough plan view of a domestic dwelling 110, which may be a building such as a house or a secured space, such as an apartment, in a building and which is protected by a security monitoring system 100. The dwelling has a front door 120, in a doorway that is a main entrance giving access to the entrance hall 125 of the building or the secured space. The door 120 is fitted with a door sensor 130 to detect the opening of the door. The door sensor 130 is typically, but not necessarily, a magnetically triggered switch which is fitted to the opening side of the door, opposite to the hinge side. It will be appreciated that the door sensor is an example of a detector to detect the breaching of the entrance represented by the doorway. It will also be appreciated that the breaching of an entrance may also be detected using a motion sensor such as a PIR sensor, a video camera or other image sensor, a floor-mounted pressure sensor, or some other contact or non-contact sensor, any of which may be used to detect the breaching of an entrance into a building, garden, farm, etc., and which may therefore generate an alarm trigger signal to indicate the breaching of a monitored entrance.

The door sensor 130 includes an RF transmitter, not shown, that transmits an entry violation signal to a central unit 140 of the monitoring system 100 in the event that the door is opened.

In this installation, the control or central unit 140 is mounted under the stairs 150 that lead to an upper floor. The control unit includes at least one first RF transceiver to receive transmissions from the door sensor and other nodes of the system. The central unit communicates with a Central Monitoring Station 150 either through a wired connection via a wired data link 160 to a broadband connection 170 within the premises to the Internet 180, or wirelessly, typically using a second transceiver. The control unit may also communicate using a Wi-Fi connection, for example to a Wi-Fi access point that gives access to the Internet over a broadband or other data link. The first RF transceiver(s) for communication with the nodes of the system will typically use an ISM (Industrial Scientific and Medical) band, such as the 868MHz band in Europe. The first RF transceiver(s) may also support Bluetooth. The second transceiver, for communication with the Central Monitoring Station 150 may also be able to use an ISM band, such as the 868 MHz band in Europe, but may also be able to use a mobile (PLMN) network such as GSM 3G, 4G, or UMTS. Preferably the central unit 140 has several ways of communicating with the Central Monitoring Station 150, so that even if one route is jammed or otherwise unavailable, the central unit is still able to report to, and receive communications from, the Central Monitoring Station.

The residence of Figure 1 includes several rooms 190, 200, 210, in addition to the entrance hall 125. Rooms 190 and 200 lead off the entrance hall, and have windows 240 but no external doors. Typically all of the windows will be provided with one or more sensors 245 to detect window opening, glass breakage, tampering or the like. Room 210 is a combined kitchen and dining room which has an external entrance door 220, which is also fitted with a door sensor 230. The kitchen dining room 210 also has a row of sliding and folding glazed doors 250, which constitute an entrance for which door sensors 260 are also provided.

As is conventional, the system also includes motion detectors, such as PIR detectors 290 to monitor all or selected ones of the rooms or spaces within the building, some or all of which may have associated image capture devices such as video cameras. These or other motion sensors may also be used to detect the breaching of an entrance, such as the opening of an entrance door, instead of utilising a door sensor such as a magnetic contact device. The system may also include one or more microphones to detect, and capture, sounds such as breaking glass, and other sensors to detect the opening of internal doors, the occurrence of flooding, the incidence of fire or smoke, etc.

In the hall 125, close to the front door 120, a disarm node 270 is mounted on a wall. The disarm node 270 has a user interface, including a touch screen or keypad to receive a user input to disarm the system, and a radio frequency transmitter, not shown, to transmit, in consequence of the user input, a disarm instruction to the control unit 140. A similar disarm node 280 is also mounted on a wall of the kitchen 210 near to the back door 220. Although the doors 250 also give access to the secured space, and are provided with door sensors to detect when they are opened, no corresponding disarm node is provided for them. This is because the sliding doors 250 are normally kept bolted on the inside, so that there is no expectation that an occupier or resident will ever enter the building through these doors when the security and monitoring system is armed. As such, any entry through those doors when the system is armed is likely to be an unauthorised entry. Similarly, it may be that the back door is always bolted on the inside when the house is left unoccupied, so that there is no expectation of a legitimate entrance through the back door when the security monitoring system is armed - in which case, the disarm node 280 for the back door may not be provided. Conversely, the owner may want to arm the system whenever she works in her back garden, which is accessed via the back door 220 - so that it is useful to provide a disarm node in the kitchen by the back door. Indeed, a gardening owner might find it very attractive to be able to disarm the system from the kitchen rather than having to walk to the central unit 140, as this would reduce the likelihood that mud from the garden would be walked through to the hall, for example.

The system is arranged so that it can be disarmed from the armed state by using the disarm node adjacent to or near the entrance through which the protected space was entered. Once a detector is triggered by a detected breach of an entrance, such as the opening of a door, it transmits an RF signal to the central unit, including an identifier for the detector, e.g. door sensor - so that the central unit can distinguish between signals received from detectors at different monitored entrances. In response to receiving an entrance breach message such as a door opening indication/message from a door sensor, the central unit starts an entry period timer - which sets a time window within which the system must be disarmed, failing which, the central unit will cause the security monitoring system to enter an alarm state. Entering an alarm state may involve the sounding of alarms and flashing lights in or at the premises. If the alarm installation is connected to a central monitoring station, the central unit will generally signal the alarm state to the Central Monitoring Station - which may lead to human intervention, video scanning, audio monitoring, etc.

In order to disarm the system, typically a code may need to be entered into the system, either at the control unit, or at a disarm node. If there is more than one disarm node, the control unit may use knowledge of the proximity of particular disarm nodes and particular entrance breach detectors (e.g. door sensors) to permit disarm only from the disarm node adjacent the entrance breach detector (e.g. PIR or magnetic contact device) that transmitted the entrance breach signal. The disarm nodes may include a physical keypad or a touch screen to enable a user to enter an appropriate disarm code, and may include visual indicators and/or a display panel to indicate progress and current system status. This approach to disarming an armed system requires manual intervention with the disarm node. The disarm nodes may also each include a near field communication (NFC) antenna and transceiver for communication with an NFC-enabled device, such as a portable authentication device in the form of a fob, a mobile phone, a watch, etc. to enable the system to be armed and disarmed by bringing the NFC-enabled device within a few centimetres of the disarm node. But again, in order to be able to disarm the system with such an NFC-enabled device, a user must have a hand free to bring the NFC-enabled device into near-contact with the disarm node.

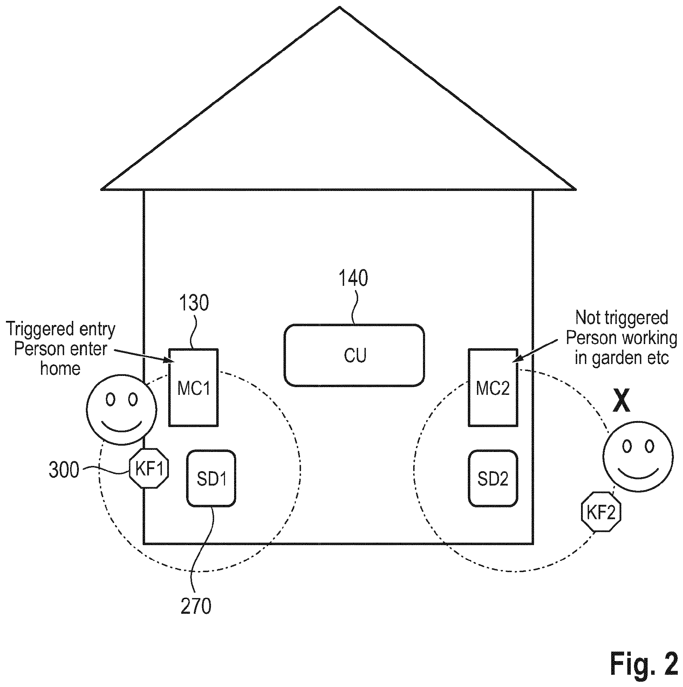

In order to permit hands-free disarming, the system is further provided with one or more portable authentication devices such as keytags or key fobs. The or each portable authentication device has a portable authentication device identity that is registered with the control unit, and a transceiver to receive signals from a disarm node and to transmit signals to the control unit. Each portable authentication device may optionally be an NFC-enabled device, as just described. Each portable authentication device also includes a motion sensor configured to sense motion of the portable authentication device and to provide an output to the processor based on sensed motion of the portable authentication device. The processor is configured to determine whether the portable authentication device is stationary or in motion, based on the output of the motion sensor. Conveniently, the motion sensor may be an accelerometer. Preferably, the accelerometer is a multi-axis, e.g. 3-axis, accelerometer. The operation of the system using one or more such portable authentication devices will now be described with reference to Figures 2, 3 and 4.

Figure 2 shows a stylised building in which a security monitoring system according to an embodiment of the invention is installed. The installation includes a central unit 140, and a door 50 giving access to the building has a door sensor 130 to detect the opening of the door (more generally, the breaching of an entrance). Adjacent the door and inside the secured space is a disarm node 270. The disarm node is preferably secured to the structure of the building so that its location with respect to the entrance 50 is fixed and the association between the particular entrance breach detector and the disarm node. The property's owner/resident 66 has a key fob 300 which can be used to enable hands-free disarming of the monitoring system. The key fob has an identity that has been registered with the central unit, and there may be more than one such fob, each with a unique identifier which is registered with the central unit and stored in its memory.

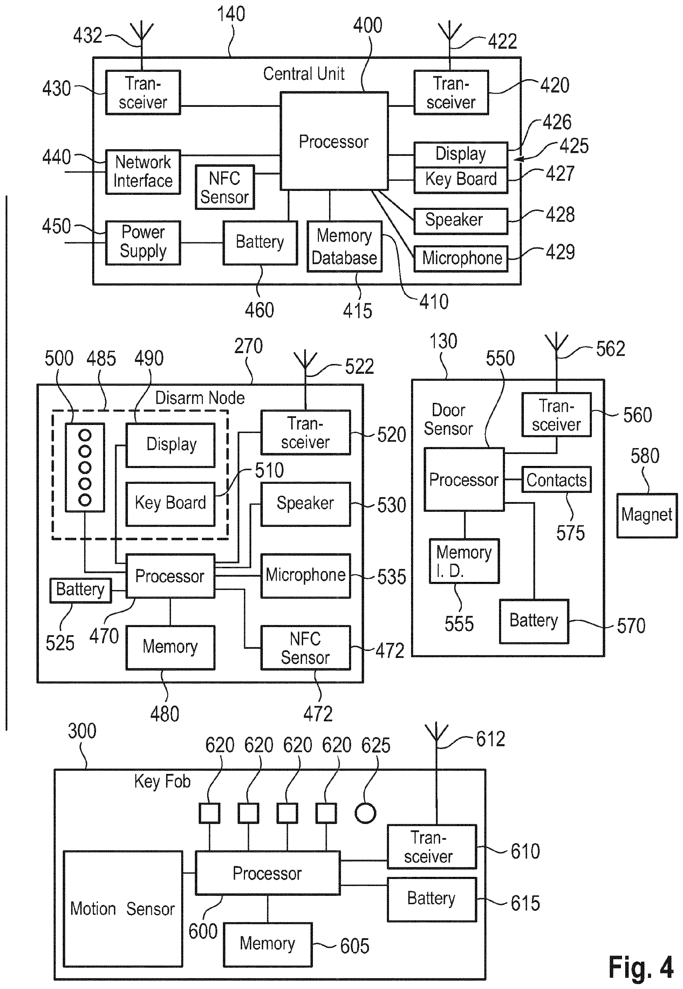

Figure 4 shows the main components of the various devices that take part in the hands-free disarming process. The control unit 140 includes a processor 400 with an associated memory 410 which stores, among other things, identities for the key fobs that are registered to the system, identities for the detectors (e.g. PIRs and/or magnetic contact devices) and disarm nodes of the system together with an association between each disarm node and the detector for the entrance closest to the relevant disarm node. These identities and associations are stored in a database 415 within the memory 410. The central unit includes at least one RF transceiver 420, with associated antenna 422, for communication with the various nodes and sensors of the monitoring system. Typically, there will be a second transceiver 430 as shown , also with an associated antenna 432, for communication with the central monitoring station 150, as a backup or alternative to a wired data connection to the Internet via a network interface 440. The antennas of the various transceivers will typically all be internal to the central unit. The processor 400 is connected to, and controls, the memory 410, transceivers 420, 430 and the network interface 440. The central unit generally draws power from the domestic power supply ( generally referred to as a mains power supply) which feeds a power supply 450 within or associated with the central unit. The central unit also includes a backup autonomous power supply, such as a battery power supply, which automatically becomes operational in the event that the external power supply fails. The internal autonomous power supply is based on rechargeable cells 460 that are kept continuously topped up by the power supply 450. The central unit may also include a user interface 425, including a display 426, a keypad or keyboard 427, a loudspeaker 428, and a microphone 429. The keypad or keyboard may be a provided by making the display a touch-sensitive display, or as a unit distinct from the display. The central unit may be arranged to accept through the keypad or keyboard a code or codes to arm and disarm the system. The central unit may also include a near field communication (NFC) antenna and a corresponding NFC chip or equivalent circuitry which can be used, for example, to detect the presence of a "disarm dongle" provided to the user of the system and which is capable of communicating with the central unit using Near Field Communication. The key fobs may also be provided with an NFC antenna and chip or equivalent circuitry, so that they can be used as "disarm dongles" with the central unit and with NFC-enabled disarm nodes.

The disarm node 270 includes a processor 470 with an associated memory 480 that stores an ID of the disarm node. The disarm node also includes a user interface 485 comprising a keyboard or number pad, 510, indicators, e.g. LEDs, 500, and optionally a display 490. If a display is provided, it may be used to provide the keyboard or number pad functionality through the use of a touch screen display as display 490. A transceiver 520, with an associated antenna 522 (which will typically be internal, rather than external as illustrated), is controlled by the processor 470, and is used for communicating with the central unit 140 and the key fob 300. The disarm node includes an autonomous power supply, e.g. battery power supply, 525, and in general this will be the only power supply as typically it is preferred not to have to connect disarm nodes to the mains power supply. A loudspeaker 530 may be provided so that audible messages and instructions can be given to a user at the disarm node. These audible messages an instructions may be automated ones, generated by the central unit all by the disarm node itself, but additionally the loudspeaker 530 can be used to relay messages from a central monitoring station 150. For example, the loudspeaker may be used to provide a disarm success or failure message, and to provide a prompt for the user to enter credentials (e.g. passcode) in the event that hands free disarm has failed. Conveniently, the disarm node may also include a microphone 535 to permit a user at the disarm node to hold a conversation with a human operative in, for example, a central monitoring station 150, or even with the emergency services - for example if patched through by the central monitoring station. Preferably, the disarm node 270 is secured to the building or other fixed property protected by the security monitoring system, for example attached to an internal wall at a height convenient for user operation - for example fixed at a height between 1 metre and 1.5 metres from the floor.

The system may be so arranged that a disarm node can only be used for disarming the system from an armed state, or may be arranged to permit the system to be armed (e.g.to either a part-armed or fully-armed state) and disarmed from a disarm node. Like the central unit, the disarm node may also include a Near Field Communication antenna and chip 472 to enable a disarm dongle, such as an NFC-enabled fob, to be used to disarm the system by bringing the dongle within a few centimetres of the disarm node.

The disarm node is preferably configured to encrypt its radio transmissions, and to decrypt received signals, so that secure communications with the control unit 140 are possible. The encryption may be based on a secret shared between the control unit 140 and the disarm node 270.

The detector to detect the breaching of the entrance is here illustrated as a door sensor 130 to detect the opening of a door. This door sensor includes a processor 550, with an associated memory 555 which stores an identifier for the door sensor, a transceiver 560, with an associated internal antenna 562, connected to, and controlled by the processor 550, all powered by an autonomous, e.g. battery, power supply 570. As with the disarm node, typically the autonomous power supply 570 will be the only power supply for the door sensor. The door sensor includes in addition a switch, for example a pair of contacts, 575, that are controlled by the opening and closing of the door with which the door sensor is associated. Typically, the contacts 575 respond to the presence of a magnetic field provided by a magnet 580. The magnet is typically attached to the leaf of the door, while the contacts are typically secured to the frame of the door. The contacts 575 may be closed in the presence of the magnetic field, opening when the contacts and the magnet are moved apart as the door opens, or they may be open in the presence of the magnetic field, closing when the field is taken away as the door is opened. Alternatives, such as Hall effect sensors, or an optical sensing arrangement, can be used in place of magnetically controlled contacts. But, because the door sensor is battery powered, the sensor arrangement is preferably one that consumes no or very little power in the resting (door closed) state - which makes the use of magnetically controlled contacts attractive.

The portable authentication device 300 includes a processor 600, with an associated memory 605 that stores an identifier for the portable authentication device, a transceiver 610, and a battery 615 that provides power to the processor and the transceiver. Transceiver 610, which has an associated antenna 612, may be a wake on radio transceiver. The use of a wake on radio transceiver typically enables a reduction in the amount of power consumed by the portable authentication device, thereby further extending the life of the battery of the portable authentication device. Alternatively, the transceiver may be a conventional polling transceiver designed for low power consumption. Such a polling transceiver, when in a resting state, periodically powers just the front end of its receiver circuit to listen (poll) for beacon signals. If a beacon signal is detected, possibly subject to some power level minimum, the rest of the receiver circuit is energised to receive transmissions. Such a polling transceiver may listen for no more than about 10 ms, e.g. for 2 ms unless a beacon signal is detected. The frequency with which the transceiver carries out polling is a compromise between battery life and responsiveness. A period between poling events of 1 to 2 seconds will typically give satisfactory responsiveness with acceptable battery life. Typically the system will be configured to enable the poling period to be set, and changed, via an RF configuration command from the central unit.

The transceiver, of whatever kind, is controlled by the processor and enables radio communication with the central unit 140 and the disarm node 270. The portable authentication device includes a motion sensor 650, configured to sense motion of the portable authentication device and to provide an output to the processor 600, to which it is operatively connected, based on sensed motion of the portable authentication device. The processor is configured to determine whether the portable authentication device is stationary or in motion, based on the output of the motion sensor. The motion sensor is typically an accelerometer, for example a 2 or 3-axis accelerometer, although other kinds of motion sensor may be used. Typically the motion sensor will have intelligent motion-based power management so that power consumption is minimised in the event that motion is not detected for a certain period of time.

When the motion detector detects no motion, the processor may be configured to generate a running count of the time since the portable authentication device was last in motion. The portable authentication device may be configured to shut down the portable authentication device's transceiver in the event that the portable authentication device is deemed to be stationary. The transceiver may then only be re-energised in the event that motion is once again detected.

The portable authentication device may be deemed to be stationary if the motion sensor senses no motion at the time the instruction is received. Alternatively, the portable authentication device may be deemed to be stationary if the motion sensor has sensed no motion of the portable authentication device during a predetermined period preceding the time when the instruction is received.

The portable authentication device may also include one or more buttons 620 which a user can use to issue commands or responses. The portable authentication device may also include one or more visual indicators 625, for example one or more LEDs, to indicate a status, to confirm a button press, or the like. For example, a single multi-coloured indicator, such as an LED, may be used to provide multiple different indications while keeping component count low and enabling the fob dimensions to be made compact. The portable authentication device is preferably configured to encrypt its radio transmissions, and to decrypt received signals, so that secure communications with the central unit are possible. The encryption may for example be based on a secret shared between the central unit and the portable authentication device.

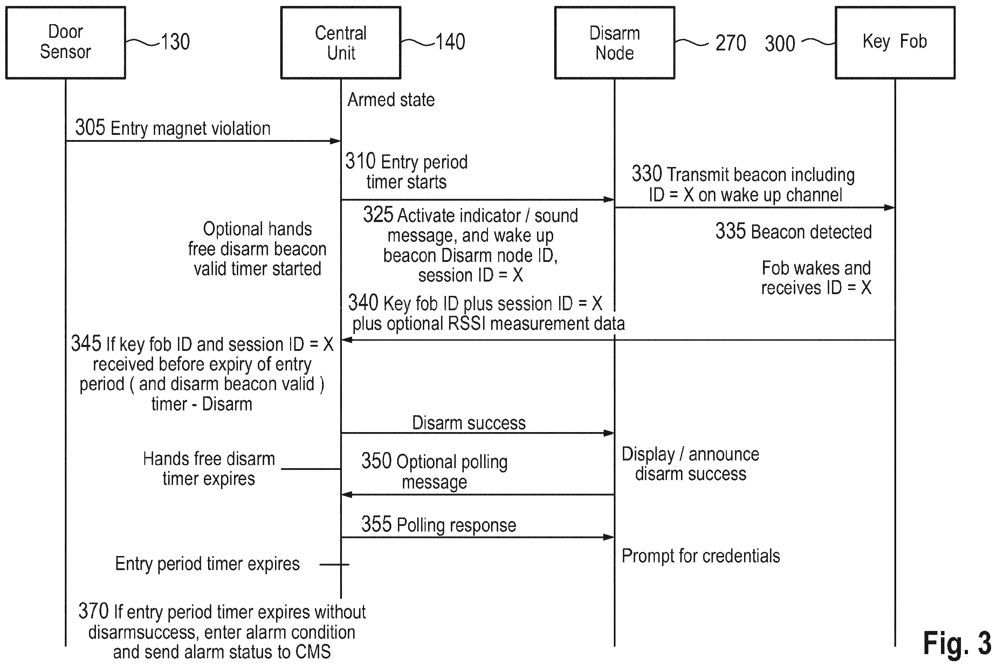

Figure 3 is a timing diagram showing the sequence of events and actions of the various elements of the security system that characterise a method, according to an embodiment of the invention, of controlling a security monitoring system to achieve hands-free disarming of the system. The diagram concerns the operations of the entrance breach detector - e.g. the door sensor 130, the central unit 140, the disarm node 270, and the portable authentication device 300.

The method start at 305 with the detector sensing an event, for example the opening of the door whose status it senses, and responding to this by using its RF transceiver to transmit an entry violation message. This entry violation message, which includes the detector's ID, is received at a transceiver of the control unit 140. In this example it is assumed that the detector is a magnetic contact device, but the method is the same or essentially the same if the entrance breach is detected using a motion sensor such as a PIR device or video camera.

The central unit starts, at 310, an entry period timer, which is set for the duration of the period within which the disarm process needs to be completed before the control unit causes the system to enter an alarm condition - for example in the range 20 to 40 seconds. The central unit identifies the detector that transmitted the entry violation message from the detector ID contained in the received message, and retrieves from the database 415 the ID of the disarm node that is associated with the identified door sensor. If no disarm node is associated with the identified door sensor, the central unit waits for the input of a disarm code at the user interface 425 or for the arrival of a message from another disarm node (e.g. a message to the effect that the disarm passcode has been entered at that disarm node) if that is permitted by the set-up of the system. But, if the database reveals that the door sensor (entrance breach detector) is associated with a disarm node, the central unit includes the ID code for that disarm node in a message which it transmits, at 315, to the disarm node 270 to cause the disarm node to activate, at 320, an indicator, an LED 500 for example, or to make a sound through loudspeaker 530, to indicate to the person entering the secured space that the system is armed and that action must be taken to disarm the system within the period set for the entry period timer. The message also causes the disarm node to transmit, at 330, a beacon signal or polling signal to wake up the transceiver in any portable authentication device (or at least any portable authentication device which is moving or which has not had its transceiver shut down following a period of non-movement) within the vicinity of the targeted disarm node, and preferably includes a special identifier to be included in the beacon signal or polling signal, and details of the packet countdown to be used. The special identifier will typically be a random or pseudo random number whose value changes at each use. The portable authentication device listens for beacon signals on one or more channels whose parameters are known to each of the portable authentication devices - for example by having been pre-programmed, but more preferably having been communicated to the or each portable authentication device when that portable authentication device first registered with the central unit (although of course the central unit could periodically update these parameters through an exchange of messages with the portable authentication device(s)). At this time, the control unit 140 preferably also starts, at 325, a hands-free disarm beacon valid timer, which determines the time within which reception by the central unit of a message from a portable authentication device (e.g. keyfob) that includes the special identifier (if used) will be effective to disarm the system. The hands-free disarm beacon valid timer setting is also included in the message sent to the disarm node. The characteristics of the beacon or polling signal transmitted by the disarm node are preferably chosen to make the effective range of the beacon signal small - preferably of the order of a few metres, e.g. no more than 5 metres for detection by a portable authentication device, so that it will only be effective in waking a portable authentication device in the immediate vicinity of the disarm node. These characteristics will be discussed in more detail later.

The transceiver 610 of a portable authentication device 300 that is within a few metres of the disarm node (and that is not currently in a shut-down state following a period of non-movement) receives the beacon signal and wakes up. The transceiver 610 receives and decodes the beacon signal, retrieving the special identifier (if used). The controller of the portable authentication device then causes the transceiver 610 of the portable authentication device to transmit, at 340, a message including the portable authentication device ID and the special identifier (if used)to the central unit 140.

The central unit checks that the special identifier (if used) is valid (meaning that it is one issued within the current period of the hands-free disarm beacon valid timer) and also checks to see whether the portable authentication device ID corresponds to one registered with the central unit. If both of these checks are passed (if a special identifier is being used), the central unit at 345, will disarm the system if the message from the portable authentication device, containing the portable authentication device id and the special identifier (if used), was received before expiry of the hands-free disarm beacon valid timer. The control unit may also at this stage send a further message to the disarm node to cause the disarm node to provide a notification of the fact that the system has been disarmed - for example, the disarm node may activate an appropriate indicator light 500 and/or provide a "disarm success" sound or announcement through the loudspeaker 530. The central unit may also send a further message to the portable authentication device to cause the fob to generate a signal indicating successful disarming of the system - for example, by illuminating an indicator on the portable authentication device.

As will be described later, the disarm request message sent by the portable authentication device to the control unit may also include a report on the RSSI levels of messages received by the portable authentication device from the wake up node, and the control unit may use the information about measured RSSI levels in such a report in determining whether or not to trust the received disarm request - i.e. whether to disregard the disarm request as invalid on the basis that it is likely to have come from a rogue actor (outside the usual range of the disarm node) rather than from an authorised user within range of the disarm node.

If the hands-free disarm beacon valid timer expires without the control unit having received a message from a portable authentication device including a registered portable authentication device ID and the special identifier (if used), the central unit preferably transmits another message, at 360, to the disarm node (including the relevant disarm node identifier) to cause the disarm node to provide a visual or audible prompt, or both, indicating the need for the system to be disarmed in some other way - e.g. by entering appropriate credentials (such as a password or PIN) at the disarm node. The disarm node then provides this prompt, visually or audibly, or both, at 365. Any credentials entered at the disarm node are forwarded by the disarm node to the central unit. If appropriate credential are received by the central unit before expiry of the entry period timer, the system is disarmed.

It will be noted that the disarm credentials are not checked at the disarm node - with the disarm node sending a "success" message, if appropriate to the central unit, but rather that the entered credentials are transmitted from the disarm node to the central unit where they are checked.

The disarm node may be configured to send, at 350, if no disarm success/failure message has been received from the central unit, a polling message to the central unit after expiry of the hands-free disarm beacon valid timer period to check whether the disarm node should provide a disarm success indication. If the central unit receives such a polling message, it transmits a polling response to indicate success/failure and to cause the disarm node to provide a disarm success indication, or to indicate to failure - and the need to provide disarm credentials of some kind, as appropriate.

If no appropriate message is received from a portable authentication device within the hands-free disarm beacon valid timer and no appropriate disarm credentials are received before expiry of the entry period timer, the control unit identifies an alarm state. If the system is backed up by a central monitoring station (CMS), the central unit will send a status change message to the CMS, typically with the identifier of the entrance breach detector that first indicated an entrance breach, such as a door opening, event. The CMS may then cause the control unit to activate relevant video cameras or other image capture devices, audio capture devices, etc. and provide data feeds from these to the CMS. The CMS may also invoke human intervention as appropriate.

The system may be set up in such a way that, if the disarm node detects an input at its user interface 485, of if a near field communication (NFC) sensor 472 in the disarm node detects the presence of an appropriate NFC tag (disarm dongle), the transmission of the disarm beacon by the disarm node is halted or forestalled. In which cases the system is disarmed by the central unit if the appropriate disarm credentials are provided at the disarm node (or at the central unit) through a user interface or by means of a registered NFC tag (that is, a tag that has previously been registered with the central unit), before expiry of the entry period timer.

In an alternative embodiment, the central unit does not start a hands-free disarm timer, but instead the disarm node starts such a timer on receiving the message sent at step 315 by the central unit. If the disarm node does not receive a disarm success message from the central unit before expiry of the hands-free disarm timer, the disarm node provides an audible and/or visual warning to the effect that hands-free disarm has failed and that the system must be disarmed in some other way - e.g. by entering a PIN or passcode, or using a registered NFC tag, to avoid the system going to an alarm state. The hands-free disarm timer run by the disarm node has, of course, a duration short enough to ensure that it expires before the entry period timer that is run by the central unit. If the security management system can provide entry period timers of different lengths, then the central unit is set up to inform the or each disarm node of the duration of the entry period timer that has been set - and an allowance is made for the time taken for the central unit to process a door open message and for a disarm node to respond to the message sent at step 315, so that the length of the hands-free disarm timer can be adjusted appropriately to suit the length of entry period timer selected.

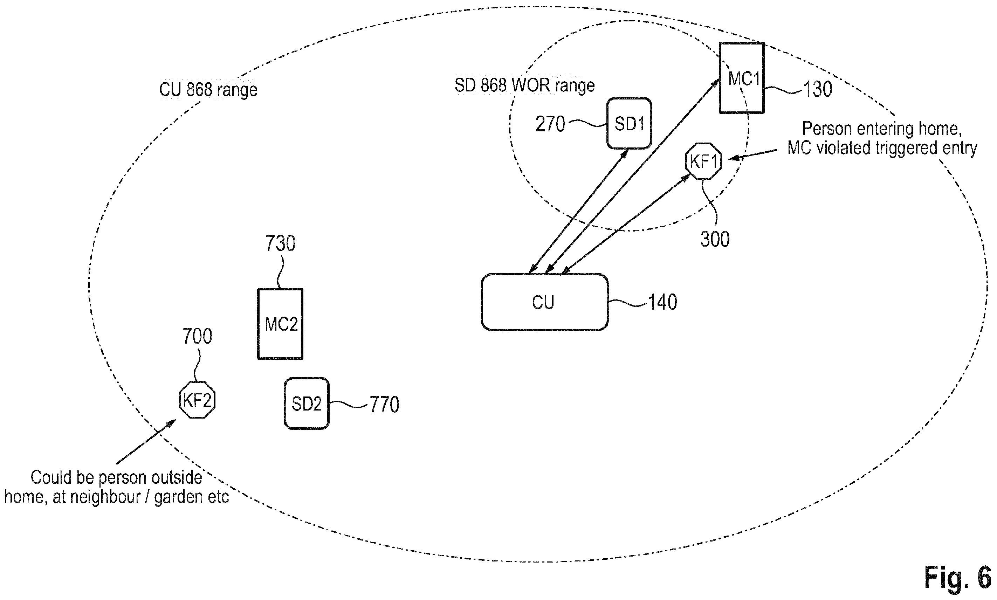

Preferably, RF communication between the central unit and the nodes, detectors and sensors of security monitoring systems according to embodiments of the invention use the industrial, scientific, and medical (ISM) radio bands, such as in Europe the 868MHz band. Within the 868 MHz band are several sub-bands dedicated to "non-specific SRD" which are of interest. For the beacon/polling signal that is used by the disarm node to activate nearby portable authentication device we are generally interested in engineering short range communication, as will shortly be explained with reference to Figure 6.

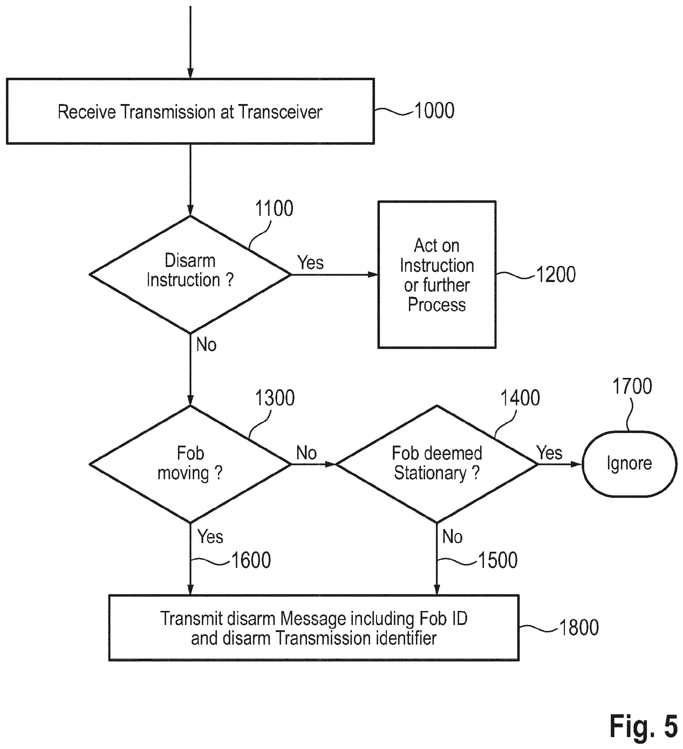

Figure 5 is a flow chart illustrating one possible process for a portable authentication device according to an embodiment of the invention to determine whether to respond to a received transmission. At 1000 the portable authentication device receives an RF transmission at its transceiver (the transceiver not having been shut down following a determination that the portable authentication device is stationary). As a first step, 1100, the portable authentication device determines whether or not the received transmission is a disarm instruction - that is, including a disarm transmission identifier of some kind, for example being a wake beacon or disarm success or failure message. If the determination is negative, that is to say it is not a disarm instruction, the process moves to step 1200.

If the determination is positive, the process proceeds to step 1300 in which the movement status of the portable authentication device is checked. If the portable authentication device is determined to be stationary, the process moves to step 1400. If the portable authentication device is configured to shut down its transceiver following a period of non-movement, when the fob is deemed to be stationary, the portable authentication device will subsequently not receive any RF transmission (until after the portable authentication device is detected as having moved again) and hence this process does not take place. But if the portable authentication device is determined to be moving, at 1600, the process proceeds to step 1800.

At step 1400, the processor determines whether the portable authentication device should be deemed to be stationary, for example by checking a count (or some other measure of elapsed time) since the portable authentication device was last determined to be moving. If the count is less than a predetermined threshold count, the portable authentication device is determined, 1500, to be a "live" portable authentication device which can be used to provide a disarm instruction to the central unit (that is, the portable authentication device is not deemed to be stationary), and the process proceeds to step 1800. If the portable authentication device is deemed to be stationary, then no disarm message will be transmitted by the portable authentication device, and the process ends at 1700

The period of inactivity that is accepted as indicating that a portable authentication device is "live" may be set differently in different installations, but typically this period will be no more than about 60 seconds. A cut off at 30 seconds will often be long enough for most users, although for system installations where the occupants or users of the secured space are elderly or infirm 30 seconds may not be long enough. Preferably the cut off period is kept relatively short, at no more than a minute or so.

If at step 1300 the portable authentication device is determined to be moving 1600, the process proceeds to step 1800.

At step 1800, the portable authentication device generates a transmission message that includes the portable authentication device ID, and the disarm transmission identifier (if used), and such other parameters as the system requires (for example, a report of measured RSSI).

At step 1200, when the transmission is determined not to be a disarm instruction, the portable authentication device may be programmed simply to read the transmission and act on the contents, or to check for a certain flag or flags and to respond differently based on the flag(s) determined to be present. So, for example, the monitoring system may be so arranged that the portable authentication device is configured to receive an instruction other than a disarm instruction via the transceiver, including a flag, from the control unit to perform an action; and wherein in the event that the other instruction includes the flag, the processor is configured to cause the portable authentication device to perform the instructed action whether or not, when the instruction is received, the portable authentication device is determined to be stationary. Portable authentication devices configured in this way can be activated by an RF signal, from the control unit or from a disarm node, enabling the status of all portable authentication devices in range to be checked and/or updated. It would also be possible to perform an audit of all the portable authentication devices in range of, say, the central unit. If such a portable authentication device were to include one or more of a visual indicator, an audio transducer, a haptic transducer, and were further configured to generate an output using one or more of these when so instructed by a received instruction including the flag, a mislaid portable authentication device could be made to announce itself. Of course this approach would only work with all portable authentication devices if they were either not configured to shut down their transceivers following a period of non-movement, or if none of them had shut down their transceiver when the RF signal from the control unit or disarm node was transmitted.

Portable authentication devices according to the invention may be configured to listen for instructions related to hands free disarm only on a particular channel or channels, with given frequency and given modulation, but to listen to another channel or channels on a different frequency and possibly with different modulation for other kinds of instructions.

Disarm instructions received from a disarm node do not typically contain a portable authentication device ID - because, if more than one portable authentication device is registered with the central unit, it cannot be assumed which if any portable authentication device is being carried by the person who opened the door whose opening has been sensed. But other message may be targeted to a particular portable authentication device or to a group of portable authentication devices that is a subset of all the registered portable authentication devices. Consequently, a portable authentication device according to embodiments of the invention may also be arranged to check the contents of received messages for the presence of that portable authentication device's ID. In this way, the control unit can target an individual portable authentication device or group of portable authentication devices. For example, in the event that a portable authentication device has been mislaid, a "announce myself" message could be transmitted by the central unit flagged with the ID of the particular portable authentication device that has been mislaid. If other portable authentication devices receive the message, they do not respond to it , because it is flagged as an "announce myself" message and does not contain their ID. Whereas the missing portable authentication device sees that the message is flagged as an "announce myself" message, recognises its own ID, and announces its presence using one or more of its inbuilt indicators (for example one or more LEDs, or providing a haptic announcement - by "buzzing" or vibrating).

In general, monitoring systems according to embodiments of the invention will not be configured to transmit only disarm messages to portable authentication devices, but will also be configured to send other types of messages to portable authentication devices. In systems that do only send portable authentication devices disarm messages, a portable authentication device just needs to recognise a received message as a disarm message and respond with the disarm transmission identifier (if used) and the portable authentication device ID (although, as will be explained later, portable authentication devices may be required to perform RSSI measurements and include these, or a report based on these, as part of the response). But in systems where there are additional message types, message types will typically fall into two classes: targeted messages that are targeted at a subset of one or more of all the registered portable authentication devices, that include one or more portable authentication device IDs, and in respect of which a reaction is sought only from the portable authentication device(s) having an ID included in the message; and group or general messages, in respect of which a reaction is sought from any portable authentication device that receives the message - and which therefore do not need to include a portable authentication device ID (and which hence will generally not include any portable authentication device ID). For example, a central unit may be configured to instruct the portable authentication device involved in a hands free disarm event to provide a disarm success indicator on a successful disarm event. Such an instruction will preferably include the ID of the portable authentication device that transmitted the disarm request to the central unit (the portable authentication device ID having been included in that disarm request).

Messages may be sent to portable authentication devices at least from the control unit (of which, in some systems, there may be more than one) and disarm nodes. Where there are multiple message types, they may be labelled Disarm Message, Group, and Targeted - labels which can be considered to be class flags. If finer granularity is required, a further level of flags may be provided - so that a message type is indicated by a primary flag (Disarm Message, Group, or Targeted), and (at least for Group and Targeted) a secondary flag that indicates the specific message type within the class. Alternatively, a single level of flags may be provided, with typically multiple flags for each of the Group and Targeted classes.

Figure 6 is a schematic diagram illustrating why we generally want the range of the beacon signals from disarm nodes to have shorter range than transmissions from the central unit of a monitoring system. A first person entering a secured space opens a door, for example the front door that gives access to a street, which is monitored by door sensor 130 or other detector. The person is carrying a portable authentication device (e.g. keyfob) 300 which is registered with the control unit of the monitoring system. Adjacent the door that is opened is a disarm node 270. The system's central unit 140 includes a database 415 that stores an association between an identifier for the door sensor 130, or other detector, and an identifier for the disarm node 270. The secured space can also be accessed by another door of the building, for example a back door that gives access to a back garden of the building, and that door is fitted with another door sensor 730, or other detector. Also near the back door, within the secured space, is another disarm node 770. A second portable authentication device, 700, is carried by another person who is also an occupier of the secured space, who is working in the back garden.

When the first person opens the front door, and the central unit causes the first disarm node to transmit a beacon signal, it is desirable that the beacon signal is received by the first key fob 300 which is adjacent (say within a metre or two at most) of the first disarm node 270, so that the first key fob wakes up, but that the second portable authentication device 700, that is carried by the second person who is working in the back garden, does not receive that beacon signal and therefore does not wake up. Of course in the scenario just described, the person opening the front door and the person carrying the second portable authentication device are both "legitimate" occupiers of the secured premises, so that there would be no problem inherently in sending a disarm signal from the second portable authentication device in respect of an entrance made by the first person (such as might happen if the first person had forgotten to carry their key fob) - as could happen if the effective range of the beacon signal from the first disarm node 270 were received and acted upon by the second portable authentication device 700. But of course, it would be a different situation if the person opening the front door were a villain who was entering the premises unlawfully through the front door. In this case, even if the villain didn't have a registered key fob, their entry would still result in the system being disarmed if the effective range of the beacon signal from the first disarm node was such as to cause the second portable authentication device to send a disarm signal to the control unit. For this reason we generally want the effective range of beacon signals from disarm nodes to be restricted to the immediate vicinity of the disarm node and including the space between the disarm node and the door with which it is associated.

These scenarios also illustrate why we want the control unit to target beaconing messages just to the disarm node that is associated with the entrance breach detector (e.g. door sensor) that has detected and reported an entrance breach. We want the beaconing messages to be detectable by all of the disarm nodes, wherever they are located. So if the beaconing messages were generic, they would possible cause all disarm nodes to transmit beaconing signals, the second portable authentication device of the person working in the back garden might be triggered by beaconing signals from the second disarm node, when a villain without a portable authentication device was effecting illicit entrance through the front door - even if the beaconing signals from the disarm nodes were all very short range.

Within the 868/869 MHz band in Europe, the sub-band between 869.7 and 870Mhz is particularly interesting for use when transmitting short-range beaconing signals from the disarm nodes because it provides a relatively wide channel, the beacon channel, which allows the use of a high data rate, e.g. 250 kbit/s, which is helpful in reducing the effective range of the beacon signal. The effective radiated power ceiling of 5mW also poses no significant constraint for this application. For these reasons, this sub-band between 869.7 and 870Mhz is the preferred frequency band for the short-range transmissions from the disarm node - and which are used for communication with portable authentication devices, e.g. for the transmission of wake up messages.

Although, for the reasons just given, we prefer to transmit the beacons from the disarm node closest to the entrance which gave rise to the alarm trigger signal, alternatives are possible.

For example, a sensor that detects the breaching of an entrance transmits an alarm trigger signal, including a sensor identifier, that is detected by the control unit. The control unit recognises the sensor identifier and uses this to retrieve the identifier for the disarm node that is associated with the relevant sensor. The control unit then transmits a message, which may be a wake up message, including the relevant disarm node identifier which has the effect of causing the relevant disarm node to listen for signals from fobs (portable identification devices). The control unit then transmits a fob wake up signal receivable by any fob adjacent any of the disarm nodes. Any fob that receives the fob wake up signal from the control unit then responds by transmitting a response signal, including its own identifier, that is only detectable by a disarm node within no more than about 2 metres of the fob (using appropriately selected transmission characteristics of power, data rate, etc. to ensure a short effective transmission range). A disarm node receiving the fob response signal then transmits a signal, including the fob identifier, to the control unit which then determines whether the fob identifier is for a registered fob. In this way only the disarm node whose identifier was included in the transmission from the control unit detects the fob response.

As a further alternative, the disarm node may be configured to generate an alarm trigger signal that is transmitted to the control unit in response to receiving an entrance breach signal from a sensor configured to detect the breaching of an entrance to the building or secured space. That is, the sensor transmits a signal in respect of a detected breach, which signal is received by the associated disarm node rather than by the control unit. The control unit then transmits a fob wake up signal receivable by any fob adjacent any of the disarm nodes. Any fob that receives the fob wake up signal from the control unit then responds by transmitting a response signal, including its own identifier, that is only detectable by a disarm node within no more than about 2 metres of the fob. A disarm node receiving the fob response signal then transmits a signal, including the fob identifier, to the control unit which then determines whether the fob identifier is for a registered fob. In this way only the disarm node whose identifier was included in the transmission from the control unit detects the fob response. However, this approach is less preferred than the alternatives already mentioned, because if the signal from the sensor detecting the breach of an entrance is only received by the control unit through the disarm node, rather than directly, the security of the system is reduced - the disarm node becomes a point of weakness, because if it is disabled or its signals blocked in some way by a bad actor, the control unit will not receive any alarm trigger signal in respect of the breach. For this reason, it would be desirable to include anti-tampering features in the disarm node, such as sensors to detect and report on attempts to open the disarm node, and possible also implementing a "heartbeat" function in which the disarm node periodically "checks-in" with the control unit - the failure of the control unit to receive the heartbeat, or the reception of a tamper message from the disarm node causing the control unit to determine an alarm condition which is reported to the central monitoring station (if present) and to provide alarm signals (audio and optical) through the alarm installation - as well as sending reports to the user's phone - email, as appropriate. Such extra security features may also be present in disarm nodes according to any of the other embodiments and variants.

Achieving effective battery life of nodes and sensors in alarm and monitoring systems is a constant concern, because battery failure disables the relevant node or sensor, which can lead to loss of security, and battery replacement may involve a site visit by the system supplier - which is expensive and inconvenient. For a portable authentication device, loss of battery power means that the portable authentication device stops working, which is inconvenient for the user, and the cause of the failure may not be apparent to the user so that the user may require a site visit to identify and fix the problem. Consequently, we are interested in reducing power consumption in all of the battery powered components of the system, including the portable authentication device. For this reason the use of a wake on radio receiver in the portable authentication device is attractive although acceptable battery life can also be obtained using a more conventional radio receiver that periodically wakes to listen (poll) for beacon signals.

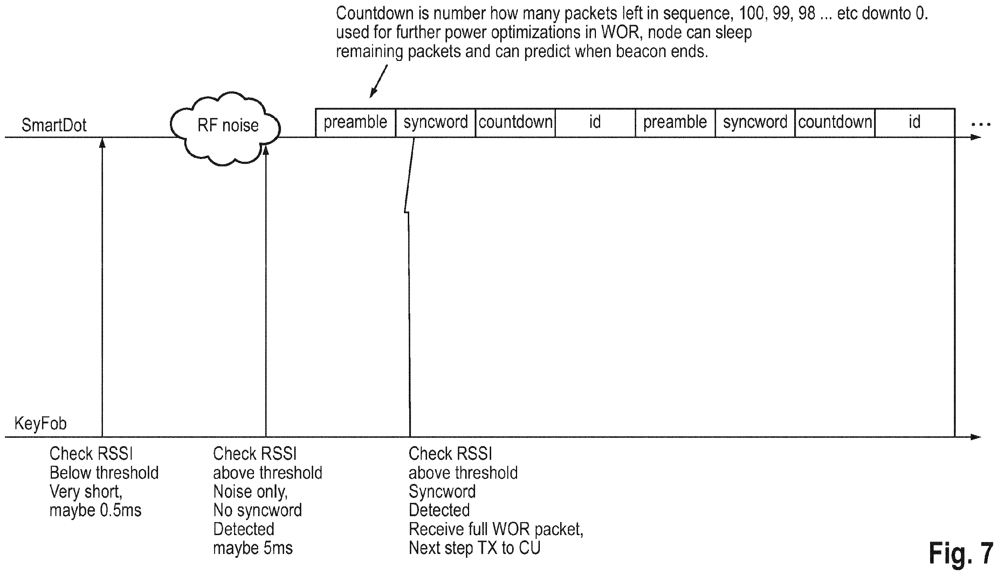

One way of reducing portable authentication device power consumption during the wake up process is for the portable authentication device to use 2-stage detection, an example of which is illustrated in Figure 7. A first detection stage of the transceiver of the portable authentication device may be used to perform a first step which involves just checking an RSSI level. For example, the transceiver in the portable authentication device may perform periodically a brief RSSI check polling the beacon channel, using just the RF front end of the transceiver, for example for a first period of less than a few milliseconds, preferably a fraction of a millisecond, e.g. around 0.5 milliseconds, and then revert to its rest state if the sensed RSSI level is below some pre-set threshold. If the sensed RSSI level is above threshold, the portable authentication device listens for a brief period for a synch word from the disarm node - for example for a second period of a few milliseconds , for example for less than 10 milliseconds, e.g. 5ms. If no synch word is detected, the transceiver reverts to its rest state. But if a synch word is detected, the transceiver starts the full radio receiver which remains powered up, for example for a third period of between say 8 to 16ms, for example 10ms, to receive the full wake up packet. Each packet will typically last of the order of 220µs, and the disarm node may transmit for 2 to 4 seconds, e.g. for 3 seconds - meaning that the portable authentication device should be able to receive 20 to 30 packets. Clearly, the choice of duration for the various periods is a trade-off between power consumption, user experience and accuracy - but the timings given represent a reasonable compromise as a starting point to be adjusted as necessary.

RSSI detection can be achieved by activating just front end components of the transceiver, avoiding the need to power up all of the transceiver. If the detected RSSI level is below a threshold, the portable authentication device determines that there is unlikely to be valid data available and halts its RSSI check until the next cycle. The cycle period determines the length of time for which the disarm node needs to transmit its beacon and also sets a lower bound on how quickly hands-free disarm is likely to occur on average. The portable authentication device wake up interval, which is controlled by a clock in the portable authentication device, will typically be chosen based on the duration of the disarm node beacon. For example, if the disarm node transmits its beacon for 2 seconds, then a portable authentication device wake up interval of one second would provide a good likelihood that a f portable authentication device within range of a broadcasting disarm node would be able to wake and retrieve the necessary information from the beacon signal. A portable authentication device wake up of interval (period between polling events) of 2 seconds will often be frequent enough when the disarm node is configured to transmit its beacon signal for 3 seconds. The portable authentication device wake up interval can conveniently be set at between a quarter and two thirds of the beacon duration. By having the portable authentication device check the RSSI for a very brief period, for example a few milliseconds, at each polling event, good battery life can generally be obtained. A shorter relative cycle time is not technically problematic, but it is likely to use proportionally more battery power and hence shorten battery life commensurately. The cycle time could be more than one half of the beacon duration, provided the system enables the portable authentication device to capture the beacon quickly after wake up, so that the necessary special ID (if used) can be recovered by the portable authentication device.

The disarm node transmits a beacon signal, on the beacon channel, which preferably includes the special codeword (shown as ID in Figure 7) received from the control unit for this hands free disarm event. Typically, the beacon signal will be made up of a sequence of packets, each beginning with a preamble, followed by a synch word, then an identifier which is the special ID from the central unit. Preferably, each packet includes a countdown value, the countdown value decreasing by one in each subsequent packet (to zero in the final packet of the sequence) and indicating the number of packets until the end of the sequence of packets.

The beacon signal is recognised as such by the portable authentication device, because it is the only message of that kind with the relevant format in that channel, causing the portable authentication device to transmit a response including the special codeword (special i.d.).

By including sequence information in the beacon from the disarm node, it becomes possible for the portable authentication device to determine when the beacon transmission will end. Using this information, the portable authentication device can delay transmitting its response to the central unit until after the disarm node has finished transmitting - so that it is easier for the central unit to detect the response from the portable authentication device without local interference. This means that portable authentication device transmit power can be kept low, prolonging the life of the portable authentication device's battery, while still enabling the control unit to receive the portable authentication device 's response. In addition, when the portable authentication device captures beacon packets, it can calculate how long it will be before the sequence ends. If the captured packets are early in the sequence, the portable authentication device can "snooze" or power down while waiting for the sequence to end, and then wake again in order to transmit its response to the central unit just after the sequence ends.

The portable authentication device will listen to multiple packets to be able to use statistics to get a reliable RSSI figure, and may report on the RSSI figure for each of the packets detected.

As a refinement, the portable authentication device controller may use movement information from the portable authentication device's built-in movement sensor to control the polling by the portable authentication device's transceiver. That is, polling may be suspended in the event that the processor deems that the portable authentication device is stationary - e.g. if movement sensor detects no movement, and the processor determines that a count since the portable authentication device was last determined to be moving is more than a predetermined threshold count, the portable authentication device is deemed to be stationary and polling may be suspended completely or the frequency of polling reduced (the preferred option, since that means that "lost" portable authentication devices can be made to announce themselves when they next poll). For example, the frequency of polling may be reduced to between a half and a twentieth, or less, of the usual frequency. Conversely, if the processor determines that the portable authentication device is still moving, or has recently been moving (so that the portable authentication device is not deemed to be stationary), the usual polling frequency is maintained. The processor of the portable authentication device may be configured to cease generating the running count of the time since the portable authentication device was last in motion after the count of the time since the fob was last in motion reaches the predetermined threshold value, as this can reduce portable authentication device energy consumption, which is good for improving battery life.

In order to reduce the effective range of the radio beacon, it is transmitted from the disarm node at a low power (e.g. -20dBm or less) with a high data rate (for example, 250kbps or more, say 400 kbps) and with a low modulation index, to give an effective range of no more than about 5 metres. By using a suboptimal modulation index we achieve three things: quickly send a lot of packets, reduce sensitivity to decrease range and to fit inside the given spectrum. We limit the output power from the disarm node to limit range. To make it harder to receive from a greater distance we have a high data rate and low modulation index. However the main reason is not the poor link budget but the speed. The higher the bitrate the more packets can be used for estimation. Sensitivity is in the range of around -90dBm at this settings and we try to be in line of sight, meaning that the distance from the transmitter is given as the fading of the channel with distance, using Friis formula .

Encryption, for example based on shared keys, is preferably used for all transmissions from and to the control unit in each of the embodiments of the invention.

As mentioned previously, a further option to improve security, which may be used with any or all of the preceding options to further enhance the security of the system, is for the portable authentication device to include in the response message sent to the control unit details of the results of RSSI determinations made by the portable authentication device. In particular, the disarm node may be configured to send a series of wake up messages upon being prompted by the control unit to send a disarm instruction, preferably including a unique disarm transmission identifier, to the portable authentication device . And the portable authentication device may be configured to determine the RSSI level of each of the messages of the series that are received from the disarm node. The portable authentication device may be configured to include in the disarm request sent to the central unit a report based on the determined RSSI levels. For example, the portable authentication device may be configured to send a summary of the RSSI levels measured, such as the number of messages/packets measured or measured above a certain level, maximum RSSI level, average RSSI level, etc.

Inclusion of the RSSI data can be used by the system to reduce the susceptibility of the system to "relay attacks" of the type used to fool passive entry systems (PES) of cars.

The portable authentication device would report RSSI values as, for example, max/min values, and an average, and the central unit may hold factory pre-set values for a "real" disarm, and/or these may be supplemented or replaced with real world values obtained during commissioning/testing of the system.

Instead of the identity of the portable authentication device being checked by the control unit, it would also be possible for the disarm node(s) to include a list of registered portable authentication devices and for the disarm node(s) rather than the control unit to perform the check of authentication device identity on receipt of the authentication devices response to the wake up signal/beacon. The disarm node would, on successful authentication transmit an alarm deactivation message to the control unit. Such an approach would of course require that the control unit update the disarm node(s) with additions and deletions to the list of registered authentication devices. This is a less preferred approach because of the need for the increased burden of keeping up to date lists in both the control unit and the disarm node(s).

Also, although as thus far described any disarm transmission identifier or event ID has been generated by the central unit and then transmitted to a disarm node for inclusion in a wake up message from the disarm node, other alternatives are of course possible. For example, the disarm node could itself generate a disarm transmission identifier or event ID and either provide this to the central unit for the central unit to check any received fob transmission for the presence of the correct disarm transmission identifier or event ID or itself check any received fob transmission for the presence of the correct disarm transmission identifier or event ID and transmit the result of the check to the central unit. In general it is preferable for the disarm transmission identifier or event ID to be generated and checked by the central unit, rather than devolving either or both of these functions to a disarm node, because this reduces the risk of a bad actor adopting the guise of a disarm node to fool the system.

In addition to being useable within the monitored space, a disarm node according to embodiments of the invention could usefully be disposed outside the monitored space or building as a means for a user to unlock a door that gives access to the monitored space of building and that has an electronically controlled lock, and to disarm the monitoring system. The provision of such an externally located disarm node could also permit a user to lock the electronically controlled lock of an access door with or without arming the system. For this use, a disarm node would preferably include a selector arrangement to enable a user to initiate an event. For example, the disarm node could include a selector to enable a user to unlock the electronically controlled lock of a door and disarming the monitoring system from an armed state, a selector for locking the lock of the door, and another selector for arming the system or for locking the lock of the door and arming the system. Such an electronically controlled lock would typically include an RF receiver, e.g. an RF transceiver, to receive control messages to lock and unlock the lock, and would typically also include means to decrypt encrypted messages received by the receiver. The selectors could be provided in the form of a keypad or as individual "buttons", preferably using capacitance sensing technology rather than as mechanical switches.

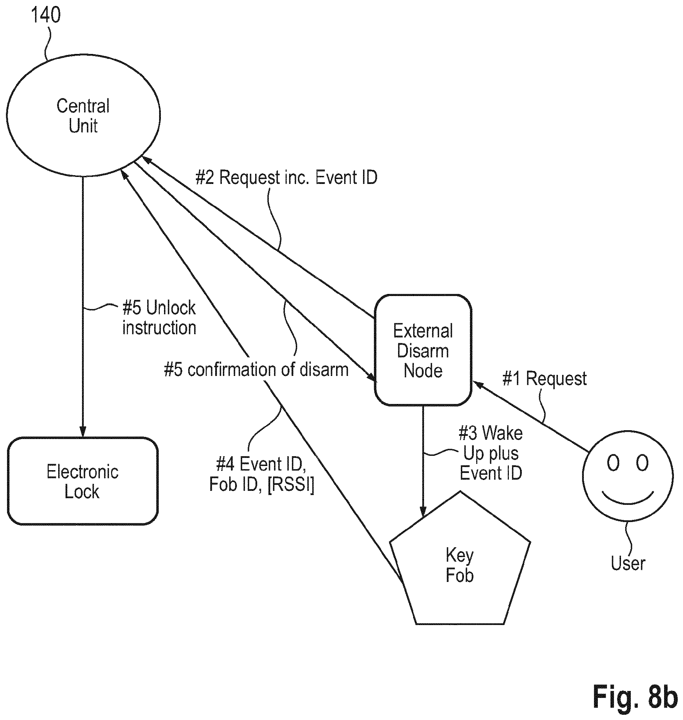

In use, according to a first embodiment, and as illustrated schematically in Figure 8b, such an externally located disarm node would react to operation of one of the selectors (event #1) by starting a "wake on radio" process (event #3) effectively to search for any user portable authentication device within range ( within 5 metres or less, e.g. within 1 or 2 metres) of the disarm node by transmitting wake up messages generally as previously described. The wake up message includes a unique event ID (e.g. a random number) which serves the same security-enhancing function as the unique event ID that the control unit has previously been described as generating for each door opening event.

In addition, the disarm node would also transmit a report (event #2) to the control unit indicating the selector that was activated - i.e. informing the central unit of the user's request. The report from the disarm node also includes the disarm node identifier and the unique event ID (if used). A user portable authentication device receiving such a wake up message responds by transmitting (event #4) a message to the central unit, including the unique event ID (if used) and its own ID. Preferably, the user's portable authentication device is also configured to perform RSSI measurement on wake up messages received from the disarm node and to include information on these RSSI measurements in the message sent to the control unit.

In an alternative second embodiment the externally located disarm node would react to operation of one of the selectors (event #1) by using its RF transceiver to send a change status request message to the control unit (event #2) , including the details of the change requested, together with the disarm node ID. The central node would transmit (event #3) a response including the disarm node ID preferably together with a unique event identifier (e.g. a random number) which is effective to cause the disarm node to start a wake on radio process. The system is arranged so that the disarm node responds to receiving a message from the central unit that includes a unique event identifier together with the disarm node's ID by starting the wake on radio process. The disarm node receiving such a response, including its own ID, would use its RF transceiver to transmit (event #4) wake on radio signals, including the unique event identifier (if used). A portable authentication device receiving the wake on radio signals would wake and transmit a signal (event #5) including its own ID, and the unique event identifier (if used). If, as preferred, the portable authentication device includes an accelerometer, as previously described, then the portable authentication device processor will determine whether the portable authentication device is stationary or not, and only transmit the response in the event that the portable authentication device is not deemed to be stationary. Preferably, the user portable authentication device is also configured to perform RSSI measurement on wake up messages received from the disarm node and to include information on these RSSI measurements in the message sent to the central unit.

With both the first and second embodiment of this aspect of the invention the sequence of operations continues as follows.

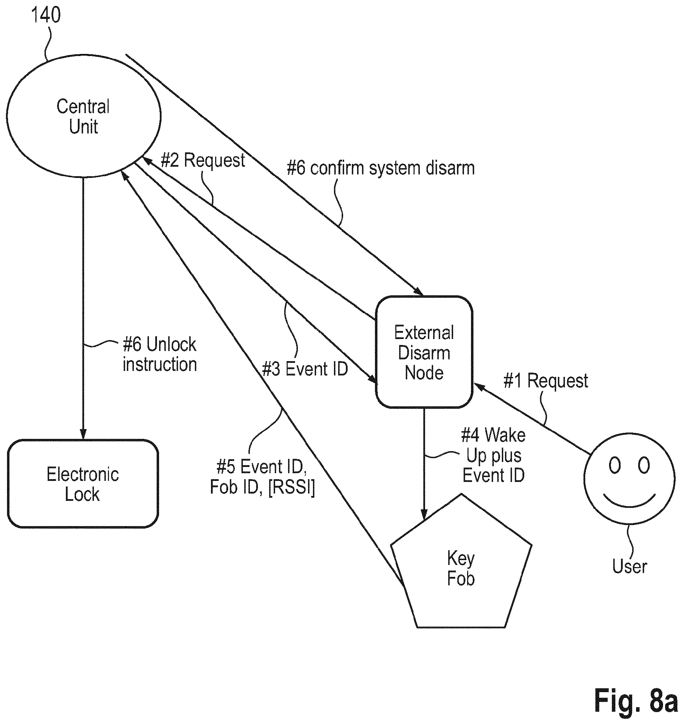

The central unit, on receiving the message from the user's portable authentication device checks to determine whether portable authentication device ID included in the message is one registered with the central unit, and also whether the event ID matches that of a "current" event. If the message received from the user portable authentication device includes RSSI information, the central unit will also take this into account in deciding whether the status change request is a valid one. If the central unit is determined to be valid, then the central unit actions the request by, sending an unlock command to the relevant door lock (event #6 in Figure 8a, and event #5 in Figure 8b) and disarming the security monitoring system. In addition, the central unit may be configured to send a status change notification to the disarm node (event #6 in Figure 8a, and event #5 in Figure 8b), including the disarm node ID, so that the disarm node can indicate the change of status visibly and or audibly.

Also, if the user portable authentication device includes a haptic device, the central unit may transmit an instruction to the fob portable authentication device to cause the portable authentication device to activate the haptic device to indicate completion of the requested action. A portable authentication device having one or more visual indicators, e.g. one or more LEDs, may also be triggered to provide a visual indication of completion of a requested action.

A portable authentication device having a haptic element may also be configured to provide haptic feedback on receipt of a wake up message from a disarm node (preferably a different mode of feedback from that for successful completion of a requested action), so that a user knows that the portable authentication device has been "found" by the disarm node.

The control unit may optionally transmit an action request "failure" message, including the disarm node ID, that the disarm node can use to provide feedback of failure to complete a requested action. The central unit can also send a failure message, including the portable authentication device ID, that the portable authentication device can use to provide feedback of failure to complete a requested action.

If the security monitoring system having a disarm node outside the monitored building or monitored zone is one which is connected to a central monitoring station, it can be useful for the registered owner of the security monitoring system to be informed of failed requests to change status. In particular, where an action request is made by operation of an event selector, and no authorised portable authentication device is found - or signals are received from a non-authorised source, details of the event may be reported by the control unit to the central monitoring station. The central monitoring station can act on such reports, by for example, sending human operatives to survey the premises, but may also send such reports to the registered owner. For example, the registered user may have a smartphone "app" which may be arranged receive notifications from the central monitoring station. The central monitoring station may be arranged to provide real time or near real time notification of failed action requests. Such a system may be further enhanced by providing notifications to the app of action requests and their results both for success and for failure, by configuring the central unit to report all such action requests and their results to the central monitoring unit.

A security monitoring system using an externally mounted disarm node could also benefit from including portable authentication devices (e.g. keyfobs) provided with an accelerometer, as described in the context of the earlier embodiments, to avoid problems with a stationary keyfob enabling the disarming of the system and the unlocking of the electronically controlled lock.

## Claims

1. A security monitoring system (100) for a building (110) or a secured space within a building (110), the system including:
a control unit for controlling, arming and disarming the security monitoring system (100), and having a radio frequency transceiver;
a door (120) giving access to the building (110) or the secured space;
an electrically controlled lock which is lockable to lock the door (120) to prevent the door (120) being opened from outside the building (110) or the secured space, and which can be unlocked to enable the door (120) to be opened from outside the building (110);
a disarm node (270) for disarming the system, the node having a user interface (485) to receive a user input to change the status of the system, and a radio frequency transmitter (520) to transmit, in consequence of the user input, a status change message to the control unit (140), the disarm node (270) being located outside the building (110) or the space;
and a portable authentication device (300) to permit hands-free disarming of the security monitoring system (100), the portable authentication device (300) including a radio frequency transceiver (610),
a memory (605) storing a portable authentication device ID that is registered with the control unit (140),
a motion sensor
and a processor (600) operatively connected to the transceiver, the motion sensor and the memory (605);
wherein the motion sensor is configured to sense motion of the portable authentication device (300) and to provide an output based on sensed motion of the portable authentication device (300), and wherein the processor (600) is configured to determine whether the portable authentication device (300) is stationary or in motion, based on the output of the motion sensor;
the disarm node (270) being configured to:
(i) transmit from the portable authentication device's transceiver, using a short-range transmission mode, a wake up message including a disarm status change event identifier;
the portable authentication device (300) being configured to respond to receipt of the wake up message by transmitting, using the portable authentication device's transceiver, a response message including the disarm status change event identifier and the portable authentication device identity, the portable authentication device's transceiver only transmitting the response message if, when the instruction is received, the portable authentication device (300) is not deemed to be stationary;
the control unit (140) being configured:
in response to receiving the response message from the portable authentication device (300), to :
(i) check whether the disarm status change event identifier is for a current status change event;
(ii) check whether the portable authentication device identifier is for a portable authentication device (300) registered with the control unit (140); and
(iii) if the two checks both give positive results, to implement the requested status change, and, if the status change request includes a request to unlock the electronic lock, to use the control unit's transceiver to transmit a signal to cause the electronic lock to be unlocked.

2. The security monitoring system (100) according to claim 1, wherein the portable authentication device (300) is deemed to be stationary if the motion sensor senses no motion at the time the instruction is received.

3. The security monitoring system (100) according to claim 1, wherein the portable authentication device (300) is deemed to be stationary if the motion sensor has sensed no motion of the portable authentication device (300) during a predetermined period preceding the time when the instruction is received.

4. A security monitoring system (100) according to any one of claims 1 to 3, wherein the control unit (140) is configured to:
generate the disarm status change event identifier in response to receipt of the status change message from the disarm node (270); and
transmit, using the control unit's transceiver, the generated disarm status change event identifier to the disarm node (270).

5. A security monitoring system (100) according to any one of claims 1 to 3, wherein the disarm node (270) is configured to:
generate the disarm status change event identifier in response to receipt of the user's status change request;
transmit, using the disarm node's transceiver the generated disarm status change event identifier to the control unit (140).

6. A security monitoring system (100) according to any one of claims 1 to 5, wherein the control unit (140) is configured, in the event that the requested status change is implemented, to transmit, using the control unit's transceiver, a status change confirmation message.

7. A method of disarming a security monitoring system (100) for a building (110) or a secured space within a building (110), the system including:
a control unit (140) for controlling, arming and disarming the security monitoring system (100), and having a radio frequency transceiver;
a door (120) giving access to the building (110) or the secured space;
an electrically controlled lock which is lockable to lock the door (120) to prevent the door (120) being opened from outside the building (110) or the secured space, and which can be unlocked to enable the door (120) to be opened from outside the building (110);
a disarm node (270) for disarming the system, the node having a user interface (485) to receive a user input to change the status of the system, and a radio frequency transmitter (520), the disarm node (270) being located outside the building (110) or the space;
and a portable authentication device (300) to permit hands-free disarming of the security monitoring system (100), the portable authentication device (300) including a radio frequency transceiver (610),
a memory (605) storing a portable authentication device ID that is registered with the control unit (140),
a motion sensor
and a processor (600) operatively connected to the transceiver, the motion sensor and the memory (605);
wherein the motion sensor is configured to sense motion of the portable authentication device (300) and to provide an output based on sensed motion of the portable authentication device (300), and wherein the processor (600) is configured to determine whether the portable authentication device (300) is stationary or in motion, based on the output of the motion sensor;
the method comprising:
(i) using the disarm node's transceiver to:
transmit, in consequence of the user input, a status change message to the control unit (140); and
transmit, using a short-range transmission mode, a wake up message including a disarm status change event identifier;
(ii) using the portable authentication device's transceiver to transmit, in response to receipt of the wake up message, a response message including the disarm status change event identifier and the portable authentication device identity, the portable authentication device's transceiver only transmitting the response message if, when the instruction is received, the portable authentication device (300) is not deemed to be stationary;
(iii) checking, using the central unit, in response to receiving the response message from the portable authentication device (300), whether the disarm status change event identifier is for a current status change event, and whether the portable authentication device identifier is for a portable authentication device (300) registered with the control unit (140); and
(iv) if the two checks both give positive results, implementing the requested status change, and, if the status change request includes a request to unlock the electronic lock, using the control unit's transceiver to transmit a signal to cause the electronic lock to be unlocked.

8. The method of claim 7, wherein the portable authentication device (300) is deemed to be stationary if the motion sensor senses no motion at the time the instruction is received.

9. The method of claim 7, wherein the portable authentication device (300) is deemed to be stationary if the motion sensor has sensed no motion of the portable authentication device (300) during a predetermined period preceding the time when the instruction is received.

10. The method of any one of claims 7 to 9, further comprising:
generating the disarm status change event identifier in the control unit (140) in response to receipt of the status change message from the disarm node (270); and
transmitting, using the control unit's transceiver, the generated disarm status change event identifier to the disarm node (270).

11. The method of any one of claims 7 to 9, further comprising:
generating the disarm status change event identifier in the disarm node (270) in response to receipt of the user's status change request;
transmitting, using the disarm node's transceiver the generated disarm status change event identifier to the control unit (140).

12. The method of any one of claims 7 to 11, further comprising:
in the event that the requested status change is implemented, transmitting, using the control unit's transceiver, a status change confirmation message.

## Patentansprüche

1. Sicherheitsüberwachungssystem (100) für ein Gebäude (110) oder einen gesicherten Raum innerhalb eines Gebäudes (110), das System beinhaltend:
eine Steuerungseinheit zum Steuern, Aktivieren und Deaktivieren des Sicherheitsüberwachungssystems (100), die einen Funkfrequenz-Sender-Empfänger aufweist;
eine Tür (120), die Zugang zu dem Gebäude (110) oder dem gesicherten Raum bietet;
ein elektrisch gesteuertes Schloss, das dazu verschließbar ist, die Tür (120) zu verschließen, um zu verhindern, dass die Tür (120) von außerhalb des Gebäudes (110) oder des gesicherten Raums geöffnet wird, und das aufgeschlossen werden kann, um zu ermöglichen, dass die Tür (120) von außerhalb des Gebäudes (110) geöffnet wird;
einen Deaktivierungsknoten (270) zum Deaktivieren des Systems, wobei der Knoten Folgendes aufweist: eine Benutzerschnittstelle (485), um eine Benutzereingabe zu empfangen, um den Status des Systems zu ändern, und einen Funkfrequenz-Sender (520), um als Folge der Benutzereingabe, eine Statusänderungsnachricht an die Steuerungseinheit (140) zu senden, wobei der Deaktivierungsknoten (270) sich außerhalb des Gebäudes (110) oder des Raums befindet;
und eine tragbare Authentifizierungsvorrichtung (300), um eine berührungslose Deaktivierung des Sicherheitsüberwachungssystems (100) zu erlauben, wobei die tragbare Authentifizierungsvorrichtung (300) einen Funkfrequenz-Sender-Empfänger (610) beinhaltet,
einen Speicher (605), der eine ID der tragbaren Authentifizierungsvorrichtung speichert, die in der Steuerungseinheit (140) registriert ist,
einen Bewegungssensor
und einen Prozessor (600), der betriebsfähig mit dem Sender-Empfänger, dem Bewegungssensor und dem Speicher (605) verbunden ist;
wobei der Bewegungssensor dazu konfiguriert ist, eine Bewegung der tragbaren Authentifizierungsvorrichtung (300) zu erfassen und eine Ausgabe basierend auf einer erfassten Bewegung der tragbaren Authentifizierungsvorrichtung (300) bereitzustellen, und wobei der Prozessor (600) dazu konfiguriert ist, basierend auf der Ausgabe des Bewegungssensors zu bestimmen, ob die tragbare Authentifizierungsvorrichtung (300) feststehend oder in Bewegung ist;
wobei der Deaktivierungsknoten (270) dazu konfiguriert ist:
(i) von dem Sender-Empfänger der tragbaren Authentifizierungsvorrichtung unter Verwendung eines Nahbereichssendemodus, eine Weckruf-Nachricht zu senden, die eine Kennung eines Deaktivierungsstatusänderungsereignisses beinhaltet;
wobei die tragbare Authentifizierungsvorrichtung (300) dazu konfiguriert ist, auf einen Empfang der Weckruf-Nachricht, unter Verwendung des Sender-Empfängers der tragbaren Authentifizierungsvorrichtung durch Senden einer Antwortnachricht zu antworten, die eine Kennung eines Deaktivierungsstatusänderungsereignisses und die Identität der tragbaren Authentifizierungsvorrichtung beinhaltet, wobei der Sender-Empfänger der tragbaren Authentifizierungsvorrichtung die Antwortnachricht nur sendet, falls, wenn die Anweisung empfangen wird, die tragbare Authentifizierungsvorrichtung (300) nicht als feststehend gilt;
wobei die Steuerungseinheit (140) dazu konfiguriert ist:
als Antwort auf das Empfangen der Antwortnachricht von der tragbaren Authentifizierungsvorrichtung (300):
(v) zu prüfen, ob die Kennung des Deaktivierungsstatusänderungsereignisses für ein aktuelles Statusänderungsereignis steht;
(vi)zu prüfen, ob die Kennung der tragbaren Authentifizierungsvorrichtung für eine tragbare Authentifizierungsvorrichtung (300) steht, die in der Steuerungseinheit (140) registriert ist; und
(vii) falls beide der zwei Prüfungen positive Ergebnisse liefern, die angeforderte Statusänderung zu implementieren, und, falls die Statusänderungsanforderung eine Anforderung beinhaltet, das elektronische Schloss aufzuschließen, den Sender-Empfänger der Steuerungseinheit zu verwenden, um ein Signal dazu zu senden, zu veranlassen, dass das elektronische Schloss aufgeschlossen wird.

2. Sicherheitsüberwachungssystem (100) nach Anspruch 1, wobei die tragbare Authentifizierungsvorrichtung (300) als feststehend gilt, falls der Bewegungssensor keine Bewegung zu dem Zeitpunkt erfasst, an dem die Anweisung empfangen wird.

3. Sicherheitsüberwachungssystem (100) nach Anspruch 1, wobei die tragbare Authentifizierungsvorrichtung (300) als feststehend gilt, falls der Bewegungssensor während eines vorbestimmten Zeitraums, vor dem Zeitpunkt, an dem die Anweisung empfangen wird, keine Bewegung der tragbaren Authentifizierungsvorrichtung (300) erfasst hat.

4. Sicherheitsüberwachungssystem (100) nach einem der Ansprüche 1 bis 3, wobei die Steuerungseinheit (140) dazu konfiguriert ist:
die Kennung des Deaktivierungsstatusänderungsereignisses als Antwort auf den Empfang der Statusänderungsnachricht von dem Deaktivierungsknoten (270) zu erzeugen; und
unter Verwendung des Sender-Empfängers der Steuerungseinheit die erzeugte Kennung des Deaktivierungsstatusänderungsereignisses an den Deaktivierungsknoten (270) zu senden.

5. Sicherheitsüberwachungssystem (100) nach einem der Ansprüche 1 bis 3, wobei der Deaktivierungsknoten (270) dazu konfiguriert ist:
die Kennung des Deaktivierungsstatusänderungsereignisses als Antwort auf den Empfang der Statusänderungsanforderung des Benutzers zu erzeugen;
unter Verwendung des Sender-Empfängers des Deaktivierungsknotens die erzeugte Kennung des Deaktivierungsstatusänderungsereignisses an die Steuerungseinheit (140) zu senden.

6. Sicherheitsüberwachungssystem (100) nach einem der Ansprüche 1 bis 5, wobei die Steuerungseinheit (140) dazu konfiguriert ist, in dem Falle, dass die angeforderte Statusänderung implementiert ist, unter Verwendung des Sender-Empfängers der Steuerungseinheit eine Statusänderungsbestätigungsnachricht zu senden.

7. Verfahren zum Deaktivieren eines Sicherheitsüberwachungssystems (100) für ein Gebäude (110) oder einen gesicherten Raum innerhalb eines Gebäudes (110), das System beinhaltend:
eine Steuerungseinheit (140) zum Steuern, Aktivieren und Deaktivieren des Sicherheitsüberwachungssystems (100), die einen Funkfrequenz-Sender-Empfänger aufweist;
eine Tür (120), die Zugang zu dem Gebäude (110) oder dem gesicherten Raum bietet;
ein elektrisch gesteuertes Schloss, das dazu verschließbar ist, die Tür (120) zu verschließen, um zu verhindern, dass die Tür (120) von außerhalb des Gebäudes (110) oder des gesicherten Raums geöffnet wird, und das aufgeschlossen werden kann, um zu ermöglichen, dass die Tür (120) von außerhalb des Gebäudes (110) geöffnet wird;
einen Deaktivierungsknoten (270) zum Deaktivieren des Systems, wobei der Knoten Folgendes aufweist: eine Benutzerschnittstelle (485), um eine Benutzereingabe zu empfangen, um den Status des Systems zu ändern, und einen Funkfrequenz-Sender (520), wobei der Deaktivierungsknoten (270) sich außerhalb des Gebäudes (110) oder des Raums befindet;
und eine tragbare Authentifizierungsvorrichtung (300), um eine berührungslose Aktivierung des Sicherheitsüberwachungssystems (100) zu erlauben, wobei die tragbare Authentifizierungsvorrichtung (300) einen Funkfrequenz-Sender-Empfänger (610) beinhaltet,
einen Speicher (605), der eine ID der tragbaren Authentifizierungsvorrichtung speichert,
die in der Steuerungseinheit (140) registriert ist,
einen Bewegungssensor
und einen Prozessor (600), der betriebsfähig mit dem Sender-Empfänger, dem Bewegungssensor und dem Speicher (605) verbunden ist;
wobei der Bewegungssensor dazu konfiguriert ist, eine Bewegung der tragbaren Authentifizierungsvorrichtung (300) zu erfassen und eine Ausgabe basierend auf einer erfassten Bewegung der tragbaren Authentifizierungsvorrichtung (300) bereitzustellen, und wobei der Prozessor (600) dazu konfiguriert ist, basierend auf der Ausgabe des Bewegungssensors zu bestimmen, ob die tragbare Authentifizierungsvorrichtung (300) feststehend oder in Bewegung ist;
das Verfahren umfassend:
(i) Verwenden des Sender-Empfängers des Deaktivierungsknotens dazu:
als Folge der Benutzereingabe eine Statusänderungsnachricht an die Steuerungseinheit (140) zu senden; und
unter Verwendung eines Nahbereichssendemodus, eine Weckruf-Nachricht zu senden, die eine Kennung eines Deaktivierungsstatusänderungsereignisses beinhaltet;
(ii) Verwenden des Sender-Empfängers der tragbaren Authentifizierungsvorrichtung, um als Antwort auf einen Empfang der Weckruf-Nachricht, eine Antwortnachricht zu senden, die die Kennung eines Deaktivierungsstatusänderungsereignisses und die Identität der tragbaren Authentifizierungsvorrichtung beinhaltet, wobei der Sender-Empfänger der tragbaren Authentifizierungsvorrichtung die Antwortnachricht nur sendet, falls, wenn die Anweisung empfangen wird, die tragbare Authentifizierungsvorrichtung (300) nicht als feststehend gilt;
(iii) Prüfen, unter Verwendung der zentralen Einheit, als Antwort auf das Empfangen der Antwortnachricht von der tragbaren Authentifizierungsvorrichtung (300), ob die Kennung des Deaktivierungsstatusänderungsereignisses für ein aktuelles Statusänderungsereignis steht, und ob die Kennung der tragbaren Authentifizierungsvorrichtung für eine tragbare Authentifizierungsvorrichtung (300) steht, die in der Steuerungseinheit (140) registriert ist; und
(vii) falls beide der zwei Prüfungen positive Ergebnisse liefern, Implementieren der angeforderten Statusänderung, und, falls die Statusänderungsanforderung eine Anforderung beinhaltet, das elektronische Schloss aufzuschließen, unter Verwendung des Sender-Empfängers der Steuerungseinheit, um ein Signal dazu zu senden, zu veranlassen, dass das elektronische Schloss aufgeschlossen wird.

8. Verfahren nach Anspruch 7, wobei die tragbare Authentifizierungsvorrichtung (300) als feststehend gilt, falls der Bewegungssensor keine Bewegung zu dem Zeitpunkt erfasst, an dem die Anweisung empfangen wird.

9. Verfahren nach Anspruch 7, wobei die tragbare Authentifizierungsvorrichtung (300) als feststehend gilt, falls der Bewegungssensor während eines vorbestimmten Zeitraums, vor dem Zeitpunkt, an dem die Anweisung empfangen wird, keine Bewegung der tragbaren Authentifizierungsvorrichtung (300) erfasst hat.

10. Verfahren nach einem der Ansprüche 7 bis 9, ferner umfassend:
Erzeugen der Kennung des Deaktivierungsstatusänderungsereignisses in der Steuerungseinheit (140) als Antwort auf den Empfang der Statusänderungsnachricht von dem Deaktivierungsknoten (270); und
Senden, unter Verwendung des Sender-Empfängers der Steuerungseinheit, der erzeugten Kennung des Deaktivierungsstatusänderungsereignisses an den Deaktivierungsknoten (270).

11. Verfahren nach einem der Ansprüche 7 bis 9, ferner umfassend:
Erzeugen der Kennung des Deaktivierungsstatusänderungsereignisses in dem Deaktivierungsknoten (270) als Antwort auf den Empfang der Statusänderungsanforderung des Benutzers;
Senden, unter Verwendung des Sender-Empfängers des Deaktivierungsknotens, der erzeugten Kennung des Deaktivierungsstatusänderungsereignisses an die Steuerungseinheit (140).

12. Verfahren nach einem der Ansprüche 7 bis 11, ferner umfassend:
in dem Fall, dass die angeforderte Statusänderung implementiert wird, Senden, unter Verwendung des Sender-Empfängers der Steuerungseinheit, einer Statusänderungsbestätigungsnachricht.

## Revendications

1. Système de surveillance de sécurité (100) pour un bâtiment (110) ou un espace sécurisé à l'intérieur d'un bâtiment (110), le système comportant :
une unité de commande destinée à commander, armer et désarmer le système de surveillance de sécurité (100), et présentant un émetteur-récepteur radiofréquence ;
une porte (120) donnant accès au bâtiment (110) ou à l'espace sécurisé ;
un verrou commandé électriquement pouvant être verrouillé afin de verrouiller la porte (120) pour empêcher l'ouverture de la porte (120) depuis l'extérieur du bâtiment (110) ou de l'espace sécurisé, et pouvant être déverrouillée pour autoriser l'ouverture de la porte (120) depuis l'extérieur du bâtiment (110) ;
un nœud de désarmement (270) pour désarmer le système, le nœud présentant une interface utilisateur (485) destinée à recevoir une saisie utilisateur pour changer l'état du système, et un émetteur radiofréquence (520) destiné à transmettre, en conséquence de la saisie utilisateur, un message de changement d'état à l'unité de commande (140), le nœud de désarmement (270) étant situé à l'extérieur du bâtiment (110) ou de l'espace ;
et un dispositif d'authentification portable (300) pour permettre un désarmement sans intervention manuelle du système de surveillance de sécurité (100), le dispositif d'authentification portable (300) comportant un émetteur-récepteur radiofréquence (610), une mémoire (605) stockant un ID de dispositif d'authentification portable qui est enregistré auprès de l'unité de commande (140),
un capteur de mouvement,
et un processeur (600) relié de manière fonctionnelle à l'émetteur-récepteur, au capteur de mouvement et à la mémoire (605) ;
dans lequel le capteur de mouvement est configuré pour détecter un mouvement du dispositif d'authentification portable (300) et fournir une sortie en fonction du mouvement détecté du dispositif d'authentification portable (300), et dans lequel le processeur (600) est configuré pour déterminer si le dispositif d'authentification portable (300) est immobile ou en mouvement, en fonction de la sortie du capteur de mouvement ;
le nœud de désarmement (270) étant configuré pour :
(i) transmettre, à partir de l'émetteur-récepteur du dispositif d'authentification portable, à l'aide d'un mode de transmission à courte portée, un message de réveil comportant un identifiant d'événement de changement d'état de désarmement ;
le dispositif d'authentification portable (300) étant configuré pour répondre à la réception du message de réveil en transmettant, à l'aide de l'émetteur-récepteur du dispositif d'authentification portable, un message de réponse comportant l'identifiant d'événement de changement d'état de désarmement et l'identité du dispositif d'authentification portable, l'émetteur-récepteur du dispositif d'authentification portable ne transmettant le message de réponse que si, au moment de la réception de l'instruction, le dispositif d'authentification portable (300) n'est pas considéré comme immobile ;
l'unité de commande (140) étant configurée:
en réponse à la réception du message de réponse provenant du dispositif d'authentification portable (300):
(i) pour vérifier si l'identifiant d'événement de changement d'état de désarmement correspond à un événement de changement d'état actuel ;
(ii) pour vérifier si l'identifiant du dispositif d'authentification portable correspond à un dispositif d'authentification portable (300) enregistré auprès de l'unité de commande (140) ; et
(iii) si les deux vérifications donnent toutes deux des résultats positifs, mettre en œuvre le changement d'état demandé et, si la demande de changement d'état comporte une demande de déverrouillage du verrou électronique, utiliser l'émetteur-récepteur de l'unité de commande pour transmettre un signal pour entraîner le déverrouillage du verrou électronique.

2. Système de surveillance de sécurité (100) selon la revendication 1, dans lequel le dispositif d'authentification portable (300) est considéré comme immobile si le capteur de mouvement ne détecte aucun mouvement au moment où l'instruction est reçue.

3. Système de surveillance de sécurité (100) selon la revendication 1, dans lequel le dispositif d'authentification portable (300) est considéré comme immobile si le capteur de mouvement n'a détecté aucun mouvement du dispositif d'authentification portable (300) pendant une période prédéterminée précédant le moment où l'instruction est reçue.

4. Système de surveillance de sécurité (100) selon l'une quelconque des revendications 1 à 3, dans lequel l'unité de commande (140) est configurée pour :
générer l'identifiant d'événement de changement d'état de désarmement en réponse à la réception du message de changement d'état provenant du nœud de désarmement (270) ; et
transmettre, à l'aide de l'émetteur-récepteur de l'unité de commande, l'identifiant d'événement de changement d'état de désarmement généré au nœud de désarmement (270).

5. Système de surveillance de sécurité (100) selon l'une quelconque des revendications 1 à 3, dans lequel le nœud de désarmement (270) est configuré pour :
générer l'identifiant d'événement de changement d'état de désarmement en réponse à la réception de la demande de changement d'état de la part de l'utilisateur ;
transmettre, à l'aide de l'émetteur-récepteur du nœud de désarmement, l'identifiant d'événement de changement d'état de désarmement généré à l'unité de commande (140).

6. Système de surveillance de sécurité (100) selon l'une quelconque des revendications 1 à 5, dans lequel l'unité de commande (140) est configurée, dans le cas où le changement d'état demandé est mis en œuvre, pour transmettre, à l'aide de l'émetteur-récepteur de l'unité de commande, un message de confirmation de changement d'état.

7. Procédé de désarmement d'un système de surveillance de sécurité (100) pour un bâtiment (110) ou un espace sécurisé à l'intérieur d'un bâtiment (110), le système comportant :
une unité de commande (140) destinée à commander, armer et désarmer le système de surveillance de sécurité (100), et présentant un émetteur-récepteur radiofréquence ;
une porte (120) donnant accès au bâtiment (110) ou à l'espace sécurisé ;
un verrou commandé électriquement pouvant être verrouillé afin de verrouiller la porte (120) pour empêcher l'ouverture de la porte (120) depuis l'extérieur du bâtiment (110) ou de l'espace sécurisé, et pouvant être déverrouillée pour autoriser l'ouverture de la porte (120) depuis l'extérieur du bâtiment (110) ;
un nœud de désarmement (270) pour désarmer le système, le nœud présentant une interface utilisateur (485) destinée à recevoir une saisie utilisateur pour changer l'état du système, et un émetteur radiofréquence (520), le nœud de désarmement (270) étant situé à l'extérieur du bâtiment (110) ou de l'espace ;
et un dispositif d'authentification portable (300) pour permettre un désarmement sans intervention manuelle du système de surveillance de sécurité (100), le dispositif d'authentification portable (300) comportant un émetteur-récepteur radiofréquence (610), une mémoire (605) stockant un ID de dispositif d'authentification portable qui est enregistré auprès de l'unité de commande (140),
un capteur de mouvement,
et un processeur (600) relié de manière fonctionnelle à l'émetteur-récepteur, au capteur de mouvement et à la mémoire (605) ;
dans lequel le capteur de mouvement est configuré pour détecter un mouvement du dispositif d'authentification portable (300) et fournir une sortie en fonction du mouvement détecté du dispositif d'authentification portable (300), et dans lequel le processeur (600) est configuré pour déterminer si le dispositif d'authentification portable (300) est immobile ou en mouvement, en fonction de la sortie du capteur de mouvement ;
le procédé comprenant :
(i) l'utilisation de l'émetteur-récepteur du nœud de désarmement pour :
transmettre, en conséquence de la saisie utilisateur, un message de changement d'état à l'unité de commande (140) ; et
transmettre, en utilisant un mode de transmission à courte portée, un message de réveil comportant un identifiant d'événement de changement d'état de désarmement :
(ii) l'utilisation de l'émetteur-récepteur du dispositif d'authentification portable pour transmettre, en réponse à la réception du message de réveil, un message de réponse comportant l'identifiant d'événement de changement d'état de désarmement et l'identité du dispositif d'authentification portable, l'émetteur-récepteur du dispositif d'authentification portable ne transmettant le message de réponse que si, au moment de la réception de l'instruction, le dispositif d'authentification portable (300) n'est pas considéré comme immobile ;
(iii) la vérification, à l'aide de l'unité centrale, en réponse à la réception du message de réponse en provenance du dispositif d'authentification portable (300), si l'identifiant d'événement de changement d'état de désarmement correspond à un événement de changement d'état actuel, et si l'identifiant du dispositif d'authentification portable correspond à un dispositif d'authentification portable (300) enregistré auprès de l'unité de commande (140) ; et
(iv) si les deux vérifications donnent toutes deux un résultat positif, la mise en œuvre du changement d'état demandé, et, si la demande de changement d'état comporte une demande de déverrouillage du verrou électronique, l'utilisation de l'émetteur-récepteur de l'unité de commande pour transmettre un signal pour entraîner le déverrouillage du verrou électronique.

8. Procédé de la revendication 7, dans lequel le dispositif d'authentification portable (300) est considéré comme immobile si le capteur de mouvement ne détecte aucun mouvement au moment où l'instruction est reçue.

9. Procédé de la revendication 7, dans lequel le dispositif d'authentification portable (300) est considéré comme immobile si le capteur de mouvement n'a détecté aucun mouvement du dispositif d'authentification portable (300) pendant une période prédéterminée précédant le moment où l'instruction est reçue.

10. Procédé de l'une quelconque des revendications 7 à 9, comprenant en outre :
la génération de l'identifiant d'événement de changement d'état de désarmement dans l'unité de commande (140) en réponse à la réception du message de changement d'état provenant du nœud de désarmement (270) ; et
la transmission, à l'aide de l'émetteur-récepteur de l'unité de commande, de l'identifiant d'événement de changement d'état de désarmement généré au nœud de désarmement (270).

11. Procédé de l'une quelconque des revendications 7 à 9, comprenant en outre :
la génération de l'identifiant d'événement de changement d'état de désarmement dans le nœud de désarmement (270) en réponse à la réception de la demande de changement d'état de la part de l'utilisateur ;
la transmission, à l'aide de l'émetteur-récepteur du nœud de désarmement, de l'identifiant d'événement de changement d'état de désarmement généré à l'unité de commande (140).

12. Procédé de l'une quelconque des revendications 7 à 11, comprenant en outre :
dans le cas où le changement d'état demandé est mis en œuvre, la transmission, à l'aide de l'émetteur-récepteur de l'unité de commande, d'un message de confirmation de changement d'état.
